# EUROPÄISCHE PATENTANMELDUNG

(11) **EP 2 770 306 A1**
(43) Veröffentlichungstag der Anmeldung: **27.08.2014**
(21) Anmeldenummer: 14156880.8
(22) Anmeldetag: 26.02.2014
(51) Int. Cl.: G01F 23/284, E21B 47/04, E21B 47/12

(54) **Verfahren zur Messung der Lage des Medienspiegels in einer Erdreichöffnung**

(30) Priorität: 26.02.2013 DE 102013101872
(71) Anmelder: boden & grundwasser GmbH, 88279 Amtzell (DE)
(72) Erfinder: Klein, Rainer Dr., 88279 Amtzell (DE)
(74) Vertreter: Pfister, Stefan Helmut Ulrich

(57) **Zusammenfassung**

Die Erfindung betrifft ein Verfahren und eine Vorrichtung, insbesondere Messverfahren beziehungsweise Medienspielmessvorrichtung zur Messung der Lage des Medienspiegels in einer Erdreichöffnung, zum Beispiel einem Bohrloch oder einer Bodenöffnung. In die Erdreichöffnung wird ein Laufzeitmesssensor eingebracht, der mit einem Signalgenerator und einer Auswerteinheit verbunden ist.

## Beschreibung

Die Erfindung betrifft ein Verfahren zur Messung der Lage des Mediumspiegels in einer Erdreichöffnung, zum Beispiel einem Bohrloch oder einer Bodenöffnung. Die Erfindung betrifft auch eine Mediumspiegelmessvorrichtung, die insbesondere zur Durchführung des Verfahrens dient.

In der Geologie ist es in den verschiedensten Anwendungen von Interesse zu wissen, auf welcher Tiefenlage (nachfolgend auch Lage genannt) ein Medium, zum Beispiel Grundwasser oder ein anderes Medium, ist. Oftmals ist es auch wünschenswert, in anthropogen Erdreichöffnungen, also Erdreichöffnungen, die von Menschen geschaffen worden sind, wie zum Beispiel Aufschlussbohrungen, Brunnenbohrungen, Dicht- und Schlitzwände, Bohrpfähle, Ankerbohrungen oder Bohrungen für die Aufnahme von Erdwärmesonden, eine kontrollierte Verfüllung mit einer aushärtenden Suspension einzubringen, um diese von Menschenhand geschaffene Erdreichöffnung sicher und geologisch zuverlässig wieder zu verschließen.

So wird zum Beispiel beim Einbau von Erdwärmesonden ein Bohrloch von 20 bis 200 m hergestellt, wobei diese Erdreichöffnung mehrere wasserführende, zueinander aber jeweils beabstandete Schichten vertikal durchdringt und die abschließende Verfüllung so zum einen einen möglichst optimalen thermischen Kontakt zu dem Erdreich herstellen und auf der anderen Seite einen Austausch der unterschiedlichen Grundwasserschichten ausschließen soll.

Es ist daher bekannt, in solchen Anwendungsfällen (wobei sich die Erfindung auf diesen Anwendungsfall nicht beschränkt) den Verfüllungsvorgang zu überwachen. Bei diesem Überwachungsprozess geht es insbesondere darum, dass der sich zwischen Erdwärmesonde und Wandung des Bohrloches ergebende Hohlraum möglichst vollständig, insbesondere luftblasenfrei verfüllt wird.

Die für diese Überwachungsaufgaben bekannten Messverfahren sind ungenau. So ist zum Beispiel ein Druckmessverfahren bekannt, welches den Innendruck der in die Erdreichöffnung einstehenden Erdwärmesonde mittels Armaturen am Sondenkopf misst. Die in die Bohrung eingebrachte Suspension oder Medium besitzt eine entsprechende Masse und Gewicht, die zu einem entsprechenden Druck auf das Rohr der Erdwärmesonde führt, welches daraufhin entsprechend komprimiert wird. Diese Druckänderung kann mit entsprechenden Armaturen gemessen werden. Dieses indirekte Verfahren ist ungenau. Es sind auch Verfahren bekannt, bei welchen verhältnismäßig großbauende Drucksensoren oder Leitfähigkeitssensoren neben dem Erdwärmesondenrohr in die Erdreichöffnung eingeführt werden, was aber aufgrund der beschränkten Platzverhältnisse im Bohrloch zu erheblichen Problemen führt. Es ist zum Beispiel bekannt, im oberen Bereich des Bohrloches eine Hilfsverrohrung anzuordnen, die das Nachrutschen von dem im oberen Bereich der Erdreichöffnung oftmals vorhandenem lockeren Erdreich vermeiden soll. Diese Hilfsverrohrrung benötigt auch radialen Platz im Bohrloch, die Auszugbewegung kann den sensiblen Druckmesssensor, der separat eingeschoben ist, beschädigen oder zerstören. Da das Herausziehen der Hilfsverrohrung erst dann erfolgt, wenn die Suspension (es handelt sich dabei zum Beispiel um eine aushärtende Zement-Bentonit-Wasser-Mischung) in das Bohrloch einläuft, besteht dabei die erhebliche Gefahr, dass während des zu überwachenden Vorgangs die Messvorrichtung ausfällt oder entfernt werden muss, das heißt, für Messungen nicht zur Verfügung steht. Neben der Tatsache, dass die bekannten Messvorrichtungen ungenauer sind, sind sie auch nicht ausreichend zuverlässig.

Ausgehend von diesem Stand der Technik ist es Aufgabe der vorliegenden Erfindung, diesen Stand der Technik zu verbessern.

Gelöst wird diese Aufgabe zum einen durch ein Verfahren, insbesondere Messverfahren, zur Messung der Lage des Mediumspiegels in einer Erdreichöffnung, zum Beispiel einem (auch anthropogenem) Bohrloch oder Bodenöffnung, wobei in die Erdreichöffnung ein Laufzeitmesssensor eingebracht wird, der Laufzeitmesssensor mit einem Signalgenerator und einer Auswerteinheit verbunden ist, wobei für die Messung der Lage auf dem Laufzeitmesssensor ein Messimpuls aufgeschaltet wird, der von einem Signalgenerator stammt, und die Auswerteinheit aus der Laufzeit bzw. der Laufzeitdifferenz des vom Laufzeitmesssensor reflektierten Antwortsignals den Lagewert des Mediumspiegels bestimmt und dieser Lagewert von einem mit der Auswerteinheit verbundenen Anzeigeeinheit angezeigt wird. Neben diesem erfindungsgemäßen Verfahren umfasst die erfindungsgemäße Lösung auch eine Mediumspiegelmessvorrichtung, insbesondere zur Durchführung des vorgenannten Verfahrens, welches für die Messung des Mediumspiegels in einer Erdreichöffnung dient, wobei die Mediumspiegelmessvorrichtung ein in die Erdreichöffnung eintauchenden Laufzeitmesssensor aufweist, der mit einem Signalgenerator zur Einprägung eines Messimpuls auf den Laufzeitmesssensor sowie mit einer Auswerteinheit zur Auswertung des Antwortsignals des Laufzeitmesssensors verbunden ist, wobei die Auswerteinheit aus der Laufzeit bzw. der Laufzeitdifferenz von Messimpuls bzw. Antwortsignal den Lagewert des Mediumspiegels ermittelt und eine Anzeigeeinheit zumindest diesen Wert anzeigt.

Der Pfiff der Erfindung liegt darin, dass das als Zeitbereichsreflektometrie oder TDR-Verfahren (Time-Domain-Reflectometrie) bekannte Verfahren für die Bestimmung beziehungsweise Messung der Lage eines Mediumspiegels in einer von Menschenhand geschaffenen Erdreichöffnung eingesetzt wird.

Die Zeitbereichsreflektometrie beziehungsweise TDR-Technologie basiert, ähnlich einem konventionellen Radar, auf der Messung eines reflektierten, elektrischen Signals, welches von einem Signalgenerator auf ein zu untersuchendes Messobjekt gegeben wird. Der von dem Signalsgenerator abgegebene Messimpuls, meist ein kurzer elektromagnetischer Impuls, wird über einen angepassten Wellenleiter in das Medium eingebracht. Wird die elektromagnetische Welle in ihrer Ausbreitung gehindert, werden Anteile der hinlaufenden Welle reflektiert und können, nach einer gewissen Zeit, wieder im Bereich der Quelle gemessen werden. Die Auswerteinheit misst dieses Signal und sie befindet sich in nächster Nähe zu der Quelle des Signals, dem Signalgenerator.

Diese Laufzeit kann unter Berücksichtigung der Ausbreitungsgeschwindigkeit zur Bestimmung des Ortes der Störstelle, wo ein Teil der Welle reflektiert wird, genutzt werden.

Der Wellenleiter kann durch eine charakteristische Impedanz beschrieben werden, welche durch die Materialeigenschaft der Leiters, des Isolators und den geometischen Aufbau bestimmt ist. Ändern sich diese Eigenschaften entlang des Leiters, so kommt es in der Folge zu einer Änderung der Impedanz. An dieser Sprungstelle kommt es dann zu einer Fehlanpassung und somit zu einer Reflektion der eingeprägten elektromagnetischen Welle. Im Falle eines Kurzschlusses oder Leerlaufes der Leitung wird die gesamte Leistung in Richtung Sender zurück reflektiert ("offenes Ende"). Ein so ausgebildeter Wellenleiter ist daher als Laufzeitmesssensor im Sinne der Erfindung einsetzbar und anpassbar. Wird nun ein entsprechender Laufzeitmesssensor als Wellenleiter konstruiert, dass der geometrische Aufbau und die Materialeigenschaften des Leiters konstant bleiben, erfolgt die Impedanzänderung hauptsächlich durch das den Leiter/Laufzeitmesssensor umgebenden Medium. Die Ausbreitungsgeschwindigkeit der Welle ist abhängig von der Dielektrizitätskonstanten des den Leiter umschließenden Mediums. In diesem Zusammenhang ist es sehr von Vorteil, dass in dem speziellen Anwendungsgebiet des erfindungsgemäßen Verfahrens, nämlich in einer Erdreichöffnung, neben Luft, Wasser und sonstige feste Medien, wie zum Beispiel zum Verfüllen der Erdreichöffnung eingebrachte, aushärtende oder aushärtbare Suspension vorgesehen ist und Dielektrizitätskonstanten DK diese Materialgruppen relativ unterschiedlich sind, sie betragen:
- Luft:: DK_{Luft}= 1
- feste Medien:: DK_{feste Medien}= 1-50
DK_{Zement-Bentonit-Wasser-Suspension}= 30-40
- Wasser:: DK_{Wasser} = 81

Damit ist an den Materialgrenzen beziehungsweise Phasenübergängen Wasser-Luft beziehungsweise Wasser-Festmaterial oder auch Luft-Festmaterial mit einer sehr signifikanten Impedanzänderung zu rechnen, die zu einem gut messbaren Antwortsignal führt.

Das erfindungsgemäße Verfahren eignet sich daher überraschenderweise hervorragend für die Bestimmung der Lage des Mediumspiegels in Erdreichöffnungen, wobei als Mediumspiegel insbesondere der (Grund-)Wasserspiegel oder auch der Mediumspiegel einer in die Erdreichöffnung eingebrachten, der Verfüllung dienenden Suspension ist. In den hierbei auftretenden Phasenunterschieden, das heißt Materialwechseln, geht ein entsprechender Sprung der Dielektrizitätskonstante einher, was die Auswertung erheblich vereinfacht.

Die erfindungsgemäße Lösung, also das Verfahren, wie auch die erfindungsgemäß vorgeschlagene Mediumspiegelmessvorrichtung, wertet das Antwortsignal in einer Auswerteinheit aus, welches von dem Signalgenerator auf den Laufzeitmesssensor gegeben worden ist. Natürlich erhält die Auswerteinheit auch den Startimpuls, also den Messimpuls, der die Zeitmessung startet.

Die Auswerteinheit umfasst dabei einen entsprechenden Algorithmus, der aus dem reflektierten Antwortsignal beziehungsweise reflektierten Antwortsignalen und den übrigen Parametern, wie Zeitpunkt des Antwortsignals, Zeitpunkt des Messimpuls, Amplitude des Messimpuls, Amplitude der Antwortsignale, Länge der Zuleitungen und gegebenenfalls Länge des Laufzeitmesssensors einen Lagewert, also zum Beispiel eine Tiefe unterhalb der Erdoberfläche, des/der Mediumspiegel/s ermittelt und diese Werte an einer Anzeigeneinheit ausgibt und anzeigt.

Ein wesentlicher Vorzug der Erfindung liegt insbesondere darin, dass dieser Lagewert innerhalb kürzester Zeit, de facto sofort oder in Realtime, an der Anzeigeeinheit zur Verfügung steht und zum Beispiel einen Bohrgeräteführer sofort die notwendige Information über den Lagewert des zu beobachtenden Mediumsspiegels mitteilt und dieser dann sofort auf entsprechende Schwierigkeiten oder Situationen reagieren kann. Die Auswerteinheit stellt daher in kürzester Zeit unter Einsetzung entsprechend effektiver Algorithmen aus den eingehenden Messsignalen die gewünschten Informationen an einer Anzeige beziehungsweise Anzeigeeinheit zur Verfügung.

In diesem Zusammenhang ist auszuführen, dass die Anzeigeeinheit und die Auswerteeinheit gegebenenfalls in ein und demselben technischen Gerät realisiert ist, oftmals werden Auswerteinheit und Anzeigeeinheit computergestützt realisiert, wobei in einer Einsteckkarte des Computers die elektromagnetischen Messsignale ausgewertet und detektiert werden und die im Computer vorhandene Uhr sowie der Bildschirm als Anzeigeeinheit verwendet werden. Darüber hinaus erlaubt der Einsatz eines entsprechenden adaptierten Computers die Möglichkeit, durch einfache Anpassung der Software, das System beliebig zu adaptieren, insbesondere erleichtert dies die Datenauswertung erheblich.

In einer bevorzugten Ausgestaltung des erfindungsgemäßen Verfahrens ist vorgesehen, dass der Laufzeitmesssensor an einer in die Erdreichöffnung einbringbaren Tragstruktur, insbesondere lagestabil vorgesehen wird und die Eindringlänge des Laufzeitmesssensors an der Tragstruktur in die Erdreichöffnung ermittelt und für Kalibrierungszwecke in die Auswerteinheit eingegeben wird. Der Laufzeitmesssensor erstreckt sich über eine erhebliche Länge (zum Beispiel über die gesamte Tiefe der Bohrung von 20 bis 200m) und ist daher entsprechend länglich ausgebildet. Wie bereits oben beschrieben, besteht dieser zum Beispiel aus einem mit dem Medium seiner Umgebung in Wechselwirkung bringbaren Wellenleiter. Es ist günstig, den Laufzeitmesssensor an einer Tragstruktur, die sowieso in die Erdreichöffnung einzubringen ist, anzuordnen und lagestabil zu befestigen, da das ansonsten schlaffe Kabel unkoordiniert in die Erdreichöffnung ist und für eine effiziente Messung nicht verwendbar ist.

Ein schlaff in das Bohrloch eingeführtes Messkabel führt zu ungenauen Messwerten, da die Relativlage des Kabels nicht genau festgelegt ist. Bei einem schlaff eingelegten Kabel besteht auch das Risiko, dass das Messkabel leicht beschädigt/zerstört wird. Der Verbesserungsvorschlag vermeidet diese Nachteile.

Ein weiterer Vorteil ergibt sich bei dem Einbau von Erdwärmesonden, da diese dann die Tragstruktur bilden, das heißt es besteht keinerlei Aufwand für die Erstellung einer Tragstruktur in diesem Anwendungsbereich.

Da die Länge der Tragstruktur und deren oberer Punkt bekannt ist, kann hieraus auch die Eindringlänge des Laufzeitmesssensors in die Erdreichöffnung problemlos bestimmt werden und somit der untere Punkt für Kalibrierungszwecke ermittelt werden. Die Auswerteinheit ist diesbezüglich kalibrierbar.

Ein wesentlicher Vorzug der Erfindung ist, dass der Laufzeitmesssensor verhältnismäßig kostengünstig herstellbar ist und daher nicht nur während der kontinuierlichen Messung des Mediumspiegels lagestabil in der Erdreichöffnung verbleibt, sondern auch hernach zum Beispiel für Kontrollzwecke der Erdreichöffnung verfügbar bleibt. Des Weiteren ist die Erfindung geeignet, mit diesem kontinuierlich zu messen, das heißt es ist die Erstellung eines lückenlosen Messprotokolls problemlos möglich, was zum Beispiel für Dokumentationszwecke günstig ist. Dabei ist zu beachten, dass als kontinuierliche Messung natürlich die Abfolge von vielen einzelnen diskreten Messvorgängen ebenfalls zählt.

Bevorzugter Weise wird der Laufzeitmesssensor beim Einbau einer Erdwärmesonde am Sondenfuß befestigt und beim kontrollierten Absenken der Erdwärmesonde an deren Tragstruktur in das Bohrloch mit in die Tiefe geführt. Geschickter Weise wird dabei der Laufzeitmesssensor in regelmäßigen Abständen straff an der Tragstruktur der Erdwärmesonde fixiert, um Beschädigungen des Sensors zu vermeiden. In diesem Zusammenhang ist auszuführen, dass die Tragstruktur entweder ein separater, eine tragende Struktur bildender Körper ist, der weitere Elemente hält oder trägt, dies kann zum Beispiel auch eine Abstandshaltefunktion sein, oder aber der Begriff "Tragstruktur" umfasst im Sinne dieser Erfindung auch die tragende Struktur einer Erdwärmesonde, die selbst eine entsprechende eigentragende Struktur aufweist. Der Begriff Tragstruktur umfasst diese beiden Varianten.

Bevorzugter Weise ist der Laufzeitmesssensor als sich zumindest über eine Teillänge der Tragstruktur erstreckende Sensorleitung ausgebildet. Die Sensorleitung besitzt zwei Enden, die über eine Wähleinheit mit der Auswerteinheit beziehungsweise Signalgenerator wahlweise verbunden sind beziehungsweise verbunden werden können. Je nach Messaufgabe ist es daher für den Anwender möglich, den Laufzeitmesssensor vom einen oder vom anderen Ende her anzusteuern und auszumessen. Da sich nun ein Ende des Laufzeitmesssensors beziehungsweise der Sensorleitung am unteren Ende der Tragstruktur befindet, wird gleichzeitig mit dem Laufzeitmesssensor auch eine Messleitung an der Tragstruktur befestigt und in der Erdreichöffnung versenkt, wobei die Messleitung mit dem unteren Ende des Laufzeitmesssensors beziehungsweise der Sensorleitung verbunden ist.

Geschickter Weise wird dabei die Messleitung als geschirmtes Koaxialkabel ausgebildet, was bevorzugter Weise bei Bohrtiefen tiefer 50m grundsätzlich erfolgt. Dies führt zu folgenden Vorteilen:

Der Laufzeitmesssensor beziehungsweise die Sensorleitung ist als offene, ungeschirmte Wellenleiter ein relativ stark dämpfendes, das heißt verlustreiches System. Das bedeutet, ein auf dem Laufzeitmesssensor laufender elektromagnetischer Messimpuls wird in der Messleitung, einem Koaxialkabel, relativ verlustfrei transportiert, dann aber in der Messstrecke des Laufzeitmesssensors gedämpft. Da dieser Messimpuls den Laufzeitmesssensor zweimal, nämlich auf dem Hin- und Rückweg zu durchlaufen hat, wird auch das Antwortsignal entsprechend gedämpft, wobei bei der Reflexion sowieso nur ein Teil der Leistung reflektiert wird. Wird nun der Messimpuls "rückseitig" eingeprägt, so durchläuft das Messimpuls eine deutlich geringere Strecke in dem auch der Dämpfung unterliegenden Sensorbereich, das zur Auswertung zur Verfügung stehende Signal ist deutlich besser.

In einem beispielhaften Anwendungsfall wird zum Beispiel mit dem erfindungsgemäßen Verfahren das Verpressen der Erdreichöffnung/des Bohrloches mit einer aushärtenden Suspension überwacht. Dabei wird die Suspension von unten her in das Bohrloch eingepresst, den Bohrgeräteführer interessiert nur der in der Tiefe liegende Mediumspiegel, der messtechnisch besser von der "Rückseite" her gemessen wird. In diesem Fall wird die Wähleinheit so eingestellt, dass der Messimpuls über das untere Ende des Laufzeitmesssensors läuft und die Laufrichtung des Messimpulses von unten nach oben, die Laufrichtung der an der Phasenübergangsstelle reflektierten Welle von oben nach unten.

Ist circa die Hälfte des Bohrloches verfüllt beziehungsweise verpresst, wird über die Wähleinheit das obere Ende an dem Signalgenerator beziehungsweise der Auswerteinheit angeschlossen, da ansonsten wiederum eine zu starke Dämpfung des Signals durch die Suspension erfolgt.

Natürlich ist die Anordnung so gewählt, dass der nicht mit dem Signalgenerator beziehungsweise Auswerteinheit verbundene Ende mit einem entsprechenden Abschlusswiderstand ordnungsgemäß abgeschlossen ist.

Der Umschaltvorgang der Wähleinheit kann in einer weiteren Variante dabei händisch ausgelöst werden oder aber erfolgt automatisch, das heißt programmgesteuert. Die Anzeigeeinheit liefert durch die Auswerteinheit aufbereitet dem Bohrgeräteführer somit automatisch den aktuellen Stand des Suspensionsspiegels unter Flur.

In einer weiteren bevorzugten Ausgestaltung des Vorschlages ist vorgesehen, dass mehrere in der Erdreichöffnung im Wesentlichen parallel, jeweils zueinander beabstandete Laufzeitmesssensoren vorgesehen sind, die mit der Auswerteinheit verbunden sind oder nacheinander verbindbar sind und die Auswerteinheit gleichzeitig oder in insbesondere kurzer Folge hintereinander die Lagewerte des Mediumspiegels mehrerer oder aller an der Auswerteinheit angeschlossenen oder anschließbaren Laufzeitmesssensoren erfasst und aus diesen Lagewerten ein Flächenprofil über den Grad der Verteilung des Mediums in der Erdreichöffnung an einem Lagewert oder in einem Lageintervall an dem Lagewert erstellt.

Die Erfindung beschränkt sich nicht nur auf den Vorschlag ein höhenprofil-aufgelöstes Messverfahren vorzuschlagen, sondern durch die Anordnung mehrerer in der Erdreichöffnung zueinander möglichst weit beabstandeter (insbesondere rechtwinklig zur Längserstreckung) Laufzeitmesssensoren wird auch eine Volumenprofildarstellung grundsätzlich ermöglicht. Da die Dielektrizitätskonstanten von Wasser, der einzubringenden, aushärtenden Suspension und Luft charakteristisch unterschiedlich sind, kann so, bezogen auf einen Lagewert oder einer Schichtdicke (entspricht dem Lageintervall) in einer gewissen Tiefe (Lagewert) ermittelt werden, ob die Suspension in dieser Tiefe flächig, allseitig verteilt ist. Einseitige Aussparungen oder Luken können somit zuverlässig detektiert und auch behoben werden, da das Verfahren nach dem Vorschlag auch während des Einbringens der Suspension diese Informationen zur Verfügung stellt.

Ein weiterer, wesentlicher Aspekt des erfindungsgemäßen Vorschlages liegt auch in einem Verfahren für das überwachte Verfüllen (=Verfüllverfahren) einer Erdreichöffnung mit einer zunächst flüssigen, dann aushärtenden Suspension als Medium, wobei die Lage des Mediums/der Suspension mit dem Verfahren zum Messen der Lage des Mediumspiegels wie vorbeschrieben durchgeführt wird und das Messverfahren zum insbesondere kontinuierlichen Messen und Anzeigen des Lagewertes des Mediumspiegels beziehungsweise Suspensionsspiegels dient.

Wie eingangs beschrieben, wird im Stand der Technik zum Beispiel bei dem Einbau von Erdwärmesonden zur Nutzung der Geothermie hinterher eine Verfüllung des Bohrloches und ein möglichst guter thermischer Anschluss des Erdwärmesondenrohres mit dem Erdreich angestrebt. Dabei ist zu beachten, dass Erdwärmesonden nicht nur für Heizzwecke, sondern auch zum Kühlen eingesetzt werden. Der Einsatz des erfindungsgemäßen Messverfahrens bei dem ebenfalls zur Erfindung zählenden Verfahren für das überwachte Verfüllen kombiniert diese beiden Aspekte und führt zu einer sehr zuverlässigen Insitu-Lagebestimmung, das heißt, während des Verfüllvorganges ist durch das erfindungsgemäße Messverfahren der Pegelstand des Suspensionsspiegels jederzeit visualisierbar und überprüfbar, wobei die Messanordnung robust, das heißt, mit geringem Risiko einer Zerstörung oder Beschädigung, kostengünstig was den Messsensor angeht und bei einer Höhe Güte, was die Ortsauflösung betrifft, ist.

In einer weiteren Verbesserung des Verfahrens, insbesondere des Verfüllverfahrens, wird das Medium, beziehungsweise die Suspension über ein an der Tragstruktur vorgesehenes Verfüllrohr im unteren Bereich der Tragstruktur, bevorzugt am tiefsten Punkt, in die Erdreichöffnung eingebracht. Es ist insofern bekannt, die Suspension von unten nach oben in die Erdreichöffnung, also das Bohrloch, einzupumpen. Diese Vorgehensweise vermeidet ein ansonsten bestehendes Verstopfungsrisiko, wenn die Suspension von oben eingefüllt wird, außerdem bleibt durch diese Verfüllweise die Messgenauigkeit des Laufzeitmesssensors erhalten, da die ansonsten von oben eingefüllte Suspension den Laufzeitmesssensor oberhalb des tatsächlichen Suspensionsspiegels benetzen würden und dort zu einem entsprechenden Reflektionssignal führen würde.

Ein weiterer Aspekt des erfindungsgemäßen Verfahrens (des Verfüllverfahrens, wie auch des Messverfahrens) ist darin zu sehen, dass der Laufzeitmesssensor auch während beziehungsweise nach dem Aushärtevorgang der Suspension in der Erdreichöffnung verbleibt und dann insbesondere eine Überwachung der Qualität beziehungsweise der Ermittlung mindestens einem anderen physikalischen Parameter der aushärtenden oder ausgehärteten Suspension dient und die Auswerteinheit eine ortsaufgelöste Auswertung des zumindest einen physikalischen Parameters zur Verfügung stellt und an der Anzeigeeinheit anzeigt.

Das in dieser Erfindung eingesetzte TDR-Verfahren misst als physikalische Eigenschaft die Dielektrizitätskonstante. Die eingefüllte Suspension verändert während des Abbindevorganges ihren Wassergehalt und damit auch die Dielektrizitätskonstante. Daher ist während des Aushärtevorganges die Bestimmung der Dielektrizitätskonstante ein mittelbarer physikalischer Parameter für die Feuchte. Bei einem homogenen Abbinden wird eine gleichbleibende Dämpfung zu erwarten sein, was sich an einem entsprechend geschwächten Reflektionssignal im Vergleich mit einem Referenzsignal ablesen und auswerten lässt.

Des Weiteren ist vorgesehen, dass der Laufzeitmesssensor als "verlorener" Sensor vorgesehen ist, also auch dann in der verfüllten Erdreichöffnung verbleibt und für spätere Vermessungen, zum Beispiel über Dichtheit oder andere physikalische Parameter einsetzbar bleibt. Hier tritt insbesondere der Vorzug zu Tage, dass der eingesetzte Laufzeitmesssensor verhältnismäßig kostengünstig herstellbar ist.

Ein weiterer Aspekt des erfindungsgemäßen Verfüllverfahrens besteht darin, dass in der Zuleitung zum Verfüllrohr oder am Verfüllrohr selbst ein Volumenstromsensor vorgesehen ist, der datentechnisch mit der Auswerteinheit verbunden ist und die Auswerteinheit bezogen auf die Lage des Mediumspiegels beziehungsweise Suspensionsspiegels das in die Erdreichöffnung eingebrachte Medium beziehungsweise Suspensionsvolumen mit erfasst und speichert.

Allgemein umfasst natürlich auch die Auswerteinheit einen Datenspeicher, bei dem die verschiedenen Messdaten gespeichert und für weitere Auswertungszwecke vorgehalten werden. Das Sammeln der Informationen, wie groß das eingebrachte Medium- beziehungsweise Suspensionsvolumen, bezogen auf eine Lage des Mediums beziehungsweise Suspensionsspiegels ist, eröffnet zusätzliche Auswertaspekte. Insbesondere ist dadurch zum Beispiel ein Soll-Ist-Vergleich möglich, da aufgrund des Kalibers der Bohrung (zum Beispiel bei einer Erdwärmesondenbohrung) das zu verfüllende Restvolumen bekannt ist, dass sich aus dem Volumen des ausgebohrten Bohrkernes abzüglich des Volumens führen die Erdwärmesondenrohre, deren Trägerstrukturen, Platzhalterstrukturen oder ähnlichem sowie der Wandstärken der eingesetzten Materialien, insbesondere des Verfüllrohres, das hinterher ja auch verfüllt ist, besteht. In einem kontinuierlichen Vergleich des eingebrachten Volumens ist somit theoretisch (Sollzustand) der zu erwartende Pegelstand berechenbar, der sofort mit dem tatsächlichen (Ist-Zustand) Pegelstand oder Lagewert vergleichbar ist. Pegel, Pegelhöhe, Pegelstand oder Lage beziehungsweise Lagewert sind einander gleichwertige, synonyme Begriffe in dieser Anmeldung.

Ein weiterer Aspekt des erfindungsgemäßen Verfahrens, insbesondere des Verfüllverfahrens ist, dass aufgrund des Lagewertes des Mediumspiegels beziehungsweise des Längenunterschiedes zweier Lagewerte und des eingebrachten Medium- beziehungsweise Suspensionsvolumens beziehungsweise des zwischen den beiden Lagewerten eingeleiteten Mediums beziehungsweise Suspensionsvolumens von der Auswerteinheit auf die Querschnittsfläche der Erdreichöffnung auf Höhe des Mediumspiegels oder zwischen zwei Mediumspiegellagen geschlossen wird und die Anzeigeeinheit dies anzeigt. So kann mittelbar auf entsprechende, in tiefen Lagen erfolgte Ausbrechungen in der Bohrwand rückgeschlossen werden.

Die Erfindung umfasst neben dem Verfahren des insbesondere als Messverfahren oder als kombiniertes Mess- und Verfüllverfahren beschrieben worden ist auch die Mediumspiegelmessvorrichtung wie eingangs beschrieben. Die Mediumspiegelmessvorrichtung, nachfolgend auch als Vorrichtung beschrieben, zeichnet sich in bevorzugten Ausgestaltungen dadurch aus, dass der Laufzeitmesssensor als Einband- oder Mehrbandwellenleiter ausgebildet ist. Eine bevorzugte Variante ist dabei zum Beispiel ein Zweiband oder Dreibandwellenleiter, bei welchen zwei oder drei Kabel im definierten Abstand zueinander als Wellenleiter eingesetzt werden. Ein Mehrbandwellenleiter ist dabei im Wesentlichen so aufgebaut, dass zwei oder mehr parallel verlaufende Kabel vorgesehen sind, die gegebenenfalls durch separate Abstandshalter auf einen definierten Abstand gehalten sind, damit die elektrischen Eigenschaften jeweils gleichbleiben. Hieraus resultiert zum Beispiel eine als "Hühnerleiterkabel" bekannte Anordnung.

Bei einer anderen Realisierungsform besitzt der Laufzeitmesssensor zumindest einen, einen Messimpuls leitenden Drahtbereich und der Laufzeitmesssensor weist des Weiteren mindestens einen Messbereich auf, der mit dem Medium derart in Verbindung steht, dass die Dielektrizitätskonstante des Mediums auf den Messimpuls zu wirken vermag. Neben dem kontinuierlichen Funktionieren des Laufzeitmesssensors in Form eines Mehrbandwellenleiters ist natürlich auch ein diskreter Aufbau möglich, bei welchem der Laufzeitmesssensor eine Mehrzahl von in deren Lagen bekannten Messbereichen aufweist, die von geschirmten Bereichen getrennt sind. Ein solcher Aufbau bietet bei der Auswertung Vorteile, da auf die Periodizität der Messbereiche hin das Auswertverfahren optimiert werden kann.

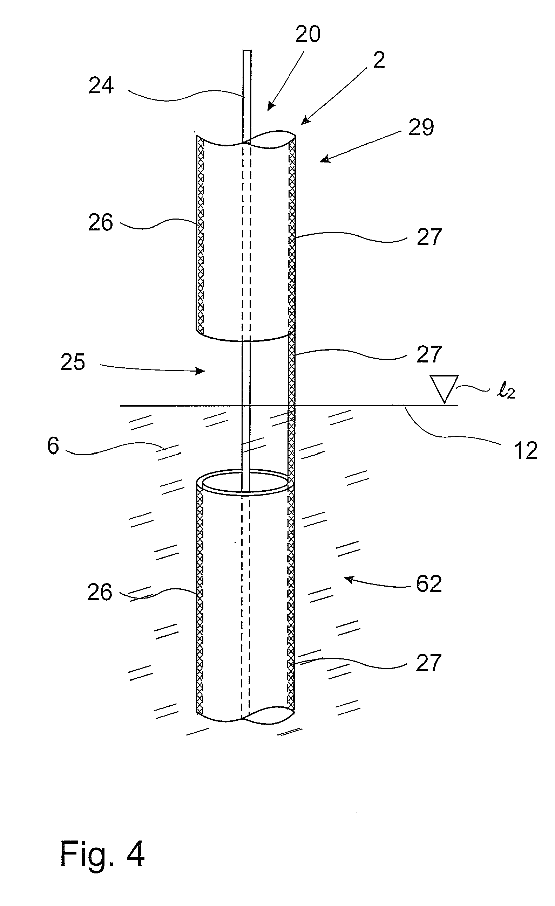

Zum Beispiel ist der Laufzeitmesssensor aus einem Koaxialkabel gebildet worden, bei welchem in den Messbereichen aus dem Koaxialkabel zumindest ein Teil des Außenleiters und gegebenenfalls des Abschirmmaterials entfernt ist. Eine solche beispielhafte Ausgestaltung des Laufzeitmesssensors ist in Fig. 4 gezeigt.

Bevorzugter Weise ist die Mediumspiegelmessvorrichtung so ausgebildet, dass der Laufzeitmesssensor an einer in die Erdreichöffnung einbringbaren Tragstruktur lagestabil angeordnet ist. Wie bereits ausgeführt, ist die Ausgestaltung der Tragstruktur sehr variabel und umfänglich zu verstehen.

Bevorzugter Weise besitzt der Laufzeitmesssensor ein erstes, oberes, in der Erdreichöffnung oben oder im oberen Bereich anordenbares Ende und ein zweites, unteres, in der Erdreichöffnung unten oder im unteren Berech angeordnetes Ende, wobei beide Laufzeitmesssensorenenden, jeweils mit einer Messleitung mit der Auswerteinheit verbunden oder verbindbar sind. Oben wurde bereits auf die Wirkung der Messung von oben oder vorne beziehungsweise von unten oder von hinten hingewiesen, was die Qualität des ermittelten Lagewertes positiv beeinflusst.

In diesem Zusammenhang ist auch auszuführen, dass die Auswerteinheit auch einen Betriebszustand aufweist, bei welchem alternierend zwischen den beiden "Kanälen" (Einspeisen des Messimpulses von oben oder von unten) in kurzer Folge hin und her geschaltet wird und beide Sorten von Antwortsignalen miteinander verglichen werden. Hieraus ist es möglich, ein Selbstkalibrierungsverfahren abzuleiten und damit auch das System bezüglich seiner Genauigkeit selbstkalibrierend auszubilden. Natürlich ist ein solcher Kalibrierungsschritt geschickter Weise nur dann durchzuführen, wenn der zu messende Medium-/Suspensionsspiegel konstant ist oder als konstant anzunehmen ist.

Geschickter Weise ist als Messleitung eine verlustfreie oder verlustarme Leitung, insbesondere ein Koaxialkabel vorgesehen, die Messleitung ist der Leitungsabschnitt, der den Laufzeitmesssensor mit der Auswerteinheit und/oder dem Signalgenerator oder der Auswerteinheit verbindet.

In einer weiteren bevorzugten Ausgestaltung ist vorgesehen, dass die Mediumspiegelmessvorrichtung mehrere, in der Erdreichöffnung im Wesentlichen parallel, jeweils zueinander beabstandete Laufzeitmesssensoren aufweist, die mit der Aufwerteinheit verbunden beziehungsweise verbindbar sind. Diese redundante Anordnung von Laufzeitmesssensoren eröffnet einige weitere überraschende Vorteile.

Zunächst ist die redundante Ausgestaltung vorteilhaft was die Betriebssicherheit angeht, da die Beschädigung oder Zerstörung eines Laufzeitmesssensors nicht automatisch zum Verlust der gesamten Messmöglichkeit führt, sondern es wird dann einfach auf einen noch funktionierenden Laufzeitmesssensor umgeschaltet. Daher sind nicht automatisch alle vorhandenen Laufzeitmesssensoren an der Auswerteinheit angeschlossen, sondern sie sind grundsätzlich anschließbar, also verbindbar. Der Vorschlag, die redundant ausgeführten Laufzeitmesssensoren zueinander auch zu beabstanden, hat auch den Vorteil, dass ein schädigendes Ereignis zunächst nur vielleicht einen Laufzeitmesssensor zerstört, der hiervon aber beabstandete zweite Laufzeitmesssensor aber unbeschädigt und weiterhin verwendbar bleibt.

Die räumliche Beabstandung der verschiedenen Laufzeitmesssensoren führt aber auch zu einer Ausweitung der Messmöglichkeiten, da die gemäß der Messverfahren ermittelten Lagewerte der Mediumspiegel so an verschiedenen Positionen (in der Fläche) in der Erdreichöffnung bestimmbar werden. Es kann somit kontrolliert werden, ob eine eingepumpte Suspension sich gleichmäßig, bezogen auf die Querschnittsfläche des Bohrloches, verteilt, oder ob hier Inhomogenitäten bestehen. Aufgrund der sehr schnell verfügbaren Lagewerte und Auswertungen kann dies dem Bohrgeräteführer unmittelbar in Realtime angezeigt werden.

Ein weiterer Aspekt der Erfindung umfasst einen Volumenstrommesssensor, der datentechnisch mit der Auswerteinheit verbunden ist, wobei der Volumenstrommesssensor in der Zuleitung des Verfüllrohrs oder im Verfüllrohr vorgesehen ist und die Auswerteinheit das in die Erdreichöffnung eingebrachte Mediumvolumen korrigiert auf den gemessenen Mediumspiegel aufzeichnet und abspeichert.

Durch eine solche Ausgestaltung ist insbesondere natürlich auch eine Dokumentation über den Verfüllvorgang problemlos möglich.

Des Weiteren umfasst die Erfindung auch ein System aus Erdwärmesonde und Laufzeitmesssensor, wobei die Erdwärmesonde eine Tragstruktur aufweist, bildet oder zur Verfügung stellt, welche einen Laufzeitmesssensor trägt, der mit einer Mediumspiegelmessvorrichtung, wie beschrieben, verbindbar ist.

Der Pfiff bei diesem System liegt darin, dass ein Sensor, insbesondere ein Laufzeitmesssensor als "verlorener Sensor" an die Erdwärmesonde, insbesondere an dessen Tragstruktur angeordnet wird und in dem Bohrloch versenkt und eingebaut wird und so während des Verfüllvorganges, während des Abbindprozesses der eingebrachten Suspension und auch zu Kontrollzwecken der Verfüllung jederzeit zur Verfügung steht. Der Laufzeitmesssensor besitzt dabei eine Anschlussmöglichkeit, die es gestattet, diesen mit der Mediumspiegelmessvorrichtung, wie beschrieben, zu verbinden. Dabei ist zu beachten, dass die Mediumspiegelmessvorrichtung zwei Betriebsmodi aufweist, nämlich eine Überwachung beziehungsweise kontinuierliche Messung des Pegels oder Medium-/Suspensionsspiegels (insbesondere während der Verfüllung), wie auch das Aufzeichnen eines Profils längs der Tiefe bezüglich interessierender physikalischer Parameter.

Daher zeichnet sich das System insbesondere während des Verfüllvorganges, der die Erdwärmesonde aufnehmenden Erdöffnung mit Suspension aus, da über die Mediumspiegelmessvorrichtung die Lage des Suspensionsspiegels über die Anzeigeeinheit letztendlich sofort, das heißt in Realtime, zur Verfügung gestellt wird. Das System ist aber auch geeignet, nach dem Verfüllvorgang, das heißt entweder während des Abbindens der Suspension oder wenn die Suspension bereits ausgehärtet ist und diese zu kontrollieren ist, über eine Messvorrichtung, insbesondere die Mediumspiegelmessvorrichtung ein, insbesondere oder bevorzugt ortsaufgelöstes Profil eines von der Dielektrizitätskonstante abhängigen physikalischen Parameters, insbesondere über eine Anzeigeeinheit zur Verfügung zu stellen.

Es ist klar, dass das System zum Beispiel in diesem Anwendungsfall, nicht nur mit der Mediumspiegelmessvorrichtung zu verbinden ist, sondern auch eine beliebige andere Messvorrichtung einsetzbar ist, die zum Beispiel für das Messen des gewünschten physikalischen Parameters optimiert ist.

Das erfindungsgemäße System wird dabei bereits werkstattseitig vorbereitet, das heißt, der Laufzeitmesssensor wird werkstattseitig an der Erdwärmesonde beziehungsweise deren Tragstruktur konfektioniert und angebaut und so komplett an die Baustelle geliefert. Natürlich ist es möglich, dass System auch erst an der Baustelle zu komplettieren, was ebenfalls von diesem Vorschlag umfasst ist.

Die erfindungsgemäße Aufgabe wird des Weiteren auch durch die Verwendung der beschriebenen Mediumspiegelmessvorrichtung gelöst, die für das überwachte Verfüllen einer Erdreichöffnung dient. Insbesondere umfasst die Erfindung auch die Verwendung der vorbeschriebenen Messvorrichtung für das überwachte Verfüllen einer Erdreichöffnung mit einer zunächst flüssigen, dann aushärtenden Suspension.

In diesem Zusammenhang wird insbesondere darauf hingewiesen, dass alle im Bezug auf die Vorrichtung, insbesondere Mediumspiegelmessvorrichtung, wie auch für das System beschriebenen Merkmale und Eigenschaften aber auch Verfahrensweisen sinngemäß auch bezüglich der Formulierung des erfindungsgemäßen Verfahrens (Mess- und/oder Verfüllverfahren) beziehungsweise der erfindungsgemäßen Verwendung übertragbar und im Sinne der Erfindung einsetzbar und als mit offenbart gelten. Gleiches gilt auch in umgekehrter Richtung, das bedeutet, nur im Bezug auf das Verfahren (Mess- und/oder Verfüllverfahren) oder der Verwendung genannte, bauliche also vorrichtungsgemäße Merkmale können auch im Rahmen der Vorrichtungsansprüche für die Mediumspiegelmessvorrichtung und/oder dem System berücksichtigt und beansprucht werden und zählen ebenfalls zur Erfindung und zur Offenbarung.

In der Zeichnung ist die Erfindung insbesondere in einem Ausführungsbeispiel schematisch dargestellt. Es zeigen:
- Fig. 1: in einer systematischen Ansicht die erfindungsgemäße Mediumspiegelmessvorrichtung (siehe Schnittlinie II/III in Fig. 1)
- Fig. 2 und 3: je einen horizontalen Schnitt durch eine Erdreichöffnung mit in die Erdreichöffnung eingeschobener Erdwärmesonde gemäß der Erfindung
- Fig. 4: in einer dreidimensionalen Ansicht eine beispielhafte Ausgestaltung einer Variante des Laufzeitmesssensors gemäß der Erfindung

In den Figuren sind gleiche oder einander entsprechende Elemente jeweils mit den gleichen Bezugszeichen bezeichnet und werden daher, sofern nicht zweckmäßig, nicht erneut beschrieben.

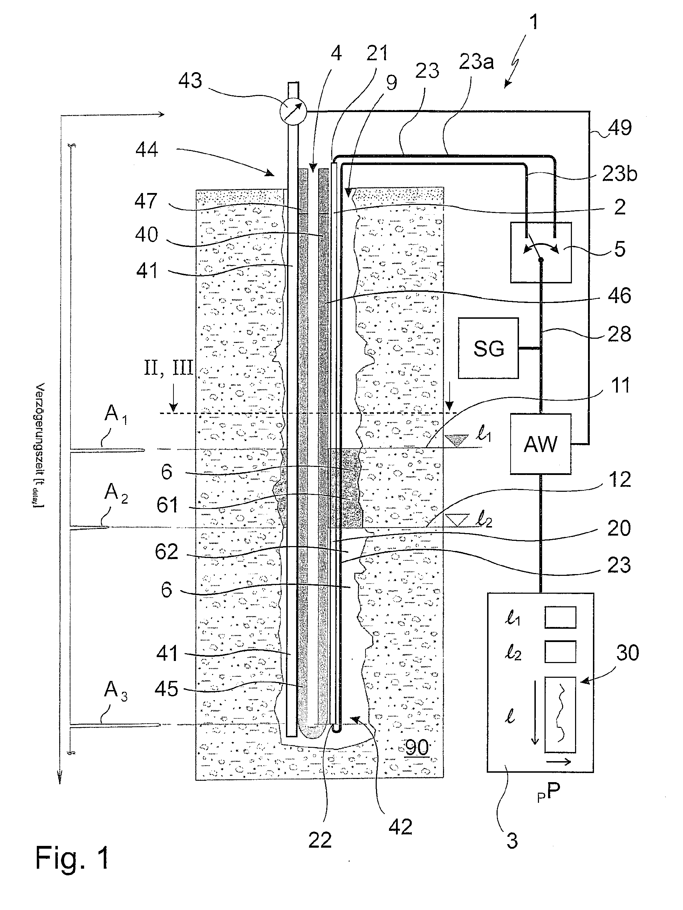

Das erfindungsgemäße Verfahren und die erfindungsgemäße Mediumspiegelmessvorrichtung 1 werden insbesondere mit Hilfe von Fig. 1 beschrieben.

In einem Erdreich 90 befindet sich eine insbesondere anthropogene Erdreichöffnung 9. Es handelt sich hierbei zum Beispiel um ein Bohrloch, in welches eine Erdwärmesonde 4 eingeführt wird, um mit Hilfe der Erdwärmesonde die Geothermie für Kühl- und Heizzwecke zu nutzen.

Die Erdwärmesonde 4 besteht aus einem oder zwei Rohrschlaufen 45, wobei in dieser Ansicht (zur Verbesserung der Übersichtlichkeit) nur eine Rohrschlaufe 45 gezeigt ist. Diese Rohrschlaufe 45 bildet prinzipiell eine Tragstruktur 40 aus. Das die Rohrschlaufe 45 durchströmende Medium, zum Beispiel eine Wasser-Glykol-Mischung, wird entlang seiner Strömungsrichtung erwärmt und entzieht so dem Erdreich Wärmeenergie, die zum Beispiel für das Beheizen eines Hauses genutzt wird. Üblicher Weise besitzen Erdreichöffnungen 9 die der Aufnahme von Erdwärmesonden 4 dienen, eine Tiefe von 20 bis 200 Meter.

Diese verhältnismäßig tiefen Bohrungen durchdringen dabei eine Vielzahl von wasserführenden Schichten und verbinden diese Schichten auch hydraulisch, wenn nicht entsprechende Vorsorge getroffen wird.

Im Stand der Technik ist es daher bekannt, die Erdreichöffnungen 9, nachdem die Erdwärmesonde 4 eingebaut ist, wieder zu verfüllen. Daher umfasst die Erdwärmesonde 4 oftmals auch ein Verfüllrohr 41, das bis in den unteren Bereich 42 der Erdreichöffnung 9 hinunterreicht und über welches ein Zement-Bentonit-Wasser-Gemisch hineingepumpt wird, um so den hydraulischen Verbund zwischen den einzelnen wasserführenden Schichten wieder zu unterbrechen und im übrigen auch einen guten thermischen Anschluss zwischen der Erdwärmesonde und den Gesteinsbereichen zu bewirken.

Die Rohrschlaufe 45 besteht dabei aus einem Vorlauf 46 und einem Rücklauf 47.

Das Verfüllen beziehungsweise Verpressen der Erdreichöffnung 9 soll mit hoher Güte erfolgen, das heißt, die einzelnen Schichten sollen wirksam hydraulisch getrennt werden. Um dies zu überwachen, schlägt die Erfindung den Einsatz eines Laufzeitmesssensors 2 nach dem TDR-Verfahren vor, wobei der Vorschlag auch eine Mediumspiegelmessvorrichtung 1 umfasst. Das Verfahren dient dabei dazu, die Lage l₁, l₂ eines Mediumspiegels 11,12 in einer Erdreichöffnung 9 zu messen, wobei in die Erdreichöffnung 9 ein Laufzeitmesssensor 2 eingebracht wird, der Laufzeitmesssensor 2 über eine Messleitung 23 mit einem Signalgenerator SG und einer Auswerteinheit AW verbunden ist. Für die Messung der Lage l₁, l₂ der Mediumspiegel 11,12 wird ein Messimpuls auf den Laufzeitmesssensor aufgeschaltet, hierzu dient der Signalgenerator SG. Aus der Laufzeit beziehungsweise der Laufzeitdifferenz des vom Laufzeitmesssensor 2 reflektierten Antwortsignals A₁,A₂bestimmt die Auswerteinheit AW den Lagewert l₁, l₂ der Medienspiegel 11,12. Diese werden von einer mit der Auswerteinheit AW verbundenen Anzeigeeinheit 3 angezeigt.

Die über das Verfüllrohr 41 eingeführte Suspension führt zu einem Ansteigen des Suspensionsspiegels 12, insbesondere dessen Lagewert l₂ ist interessant. Da die Suspension schwerer ist als Wasser, sammelt sich über der Suspension 62 (Grund)-Wasser 61, das seinerseits einen Mediumspiegel 11 ausbildet, auch dieser Lagewert l₁ ist oftmals von Interesse und wird mit dem erfindungsgemäßen Messverfahren auch ermittelt.

Der Laufzeitmesssensor 2 ist über die Messleitung 23,23a sowie der Messleitung 23,23b mit der Wähleinheit 5 verbunden. Hierbei ist zu beachten, dass die Messleitung 23a das erste, obere Ende 21 des Laufzeitmesssensors 2 mit der Wähleinheit 5 verbindet, die Messleitung 23b ist deutlich länger und verbindet das untere Ende 22 des Laufzeitmesssensors 2 mit der Wähleinheit 5. Bevorzugter Weise sind beide Messleitungen 23,23a,23b als verlustarme Messleitungen ausgebildet, vorzugsweise als Koaxialkabel. Die erste Messleitung 23a endet an dem oberen, aus der Erdreichöffnung 9 hervorragenden oberen Ende 21 des Laufzeitmesssensors 2, das untere Ende 22 endet im unteren Fußbereich 42 der Tragstruktur 40 beziehungsweise der Erdwärmesonde 4.

Der Messimpuls wird vom Signalgenerator SG erzeugt und breitet sich auf der Verbindungsleitung 28 sowohl in Richtung der Auswerteinheit AW, wie auch in Richtung der Wähleinheit 5 aus und läuft dann über den in der Wähleinheit 5 angeschlossenen Kanal entweder an das obere 21 oder untere Ende 22 des Laufzeitmesssensors 2.

In der hier gezeigten Stellung ist das untere Ende 22 auf der Wähleinheit 5 eingestellt, das heißt, der Messimpuls läuft durch das lange Koaxialkabel 23 in der Erdreichöffnung 9 nach unten und wird dort am unteren Ende 22 in den Laufzeitmesssensor 2 eingekoppelt. Die Umschaltbarkeit der Wähleinheit 5 ist durch den gebogenen Doppelpfeil angedeutet.

Sowohl der als Sensorleitung 20 ausgebildete Laufzeitmesssensor 2 wie auch die Messleitung 23 werden in geeigneter Weise an der Tragstruktur 40 der Erdwärmesonde 4 oder einer vergleichbaren Tragstruktur befestigt. Dies kann zum Beispiel durch Anbinden oder Ankleben erfolgen, es können natürlich auch entsprechende Führungskanäle vorgesehen sein, günstiger Weise ist die Befestigung der Sensorleitung 20 aber so ausgebildet, dass das die Sensorleitung umspülende Medium 6,61,62 problemlos an den Drahtbereich der Sensorleitung 20 gelangen kann. Auf eine straffe Anordnung wird geachtet, damit keine störenden Kabelschlaufen bei dem Einführprozess Schaden nehmen können.

In dem hier gezeigten Ausführungsbeispiel läuft dann der Messimpuls von unten nach oben und wird dort, wo sich die Sensorleitung 20 umgebende Dieleketrizitätskonstante die unterscheidet, in signifikanter Weise reflektiert. Dies wird bei dem unteren Medienspiegel 12 wie auch bei dem oberen Medienspiegel 11 erfolgen.

In Fig. 1 ist links ein typisches Reflektionsdiagramm über der Zeit gezeigt, wobei das hier gezeigte Beispiel die Situation wiedergibt, wo der Messimpuls des Signalgenerators SG auf die kurze Messleitung 23a gegeben wird, die am oberen Ende 21 des Laufzeitmesssensors in die Sensorleitung 20 einkoppelt und das untere Ende 22 des Laufzeitmesssensors offen ist beziehungsweise keinen Anschluss an eine Rückleitung aufweist (in der Fig. nicht gezeigt). In dieser Variante wird dem Messimpuls an dem ersten gravierenden Phasenwechsel bei dem Mediumspiegel 11 des Grundwasser 61, der mit einer entsprechenden Änderung der Dielektrizitätskonstante einhergeht, reflektiert, was zu einem typischen Antwortsignal A₁ in dem Zeitdiagramm führt.

In diesem Fall trifft die auf der Sensorleitung 20 laufende elektromagnetische Welle aus dem Medium Luft (Dielektrizitätskonstante = 1) auf das Medium Wasser mit der Dielekrizitätskonstante 81. Unterhalb dieser geringen Wassersäule 61 schließt sich dann die eingepumpte und schwerere Suspension 62 an, die auch eine andere Dielektrizitätskonstante aufweist und daher zu dem Antwortsignal A₂ führt.

Das Antwortsignal A₃ resultiert aus dem offenen Ende, da wie beschrieben an dem unteren Ende 22 in diesem Ausführungsbeispiel keine Rückleitung vorgesehen ist.

Die reflektierten Antwortsignale A₁, A₂, A₃ laufen den gleichen Weg wieder zurück und gelangen dann über die Wähleinheit 5 in die Auswerteinheit AW und werden dort bezüglich ihres zeitlichen Eintreffens und bezüglich ihrer Pulshöhe beziehungsweise anderer Parameter des Pulses vermessen.

Bei Kenntnis der Länge der Messleitung 23a, die sowohl von dem Antwortsignal als auch von dem Messimpuls durchlaufen werden muss (und zwar in gleicher Weise nur in unterschiedlicher Richtung) rechnet dann die Auswerteinheit AW auf die Lage l₁ beziehungsweise l₂ zurück, die mit den Medienspiegeln 11 und 12 kommunizieren. Diese ermittelten Werte überträgt dann die Auswerteinheit AW auf die Anzeigeeinheit 3, welche diese visualisiert.

Günstigerweise wird das in die Erdreichöffnung 9 eingebrachte Suspensionsvolumen ebenfalls erfasst und dokumentiert. Hierzu dient ein am Verfüllrohr 41 vorgesehener Volumenstrommesssensor 43, der datentechnisch über die Datenleitung 49 mit der Auswerteinheit AW verbunden ist.

Korreliert mit den Lagewerten l₁ und/oder l₂ werden die jeweils eingeförderten Suspensions- beziehungsweise Mediumvolumen erfasst und in geeigneter Weise ausgewertet.

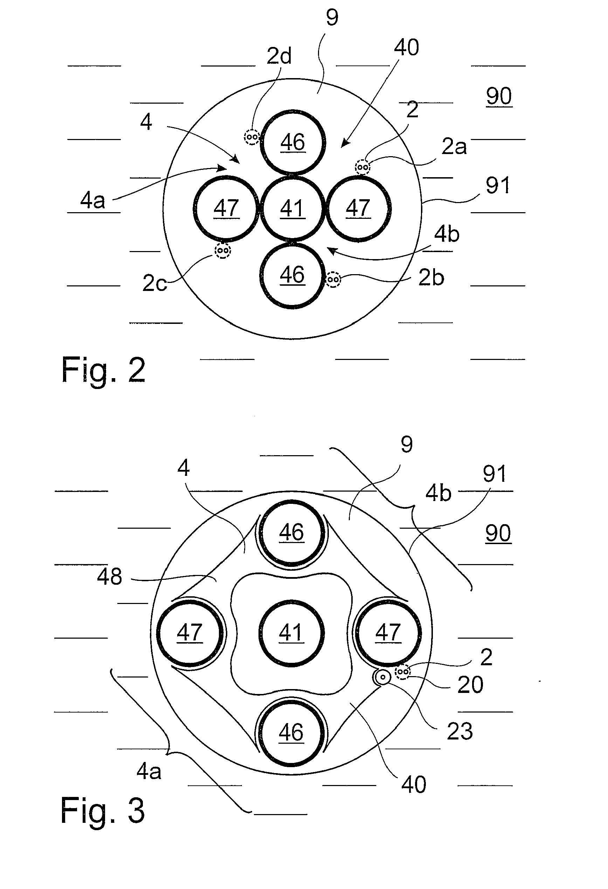

Fig. 2, 3 zeigen einen horizontalen Schnitt durch die Erdreichöffnung 9, in welchem zwei unterschiedliche Systeme von Erdwärmesonde 4 und Laufzeitmesssensor 2 angeordnet sind.

Die Erdreichöffnung 9 wird von Erdreich 90 umgeben, begrenzt wird die Erdreichöffnung 9 von einer üblicher Weise runden Bohrwand 91.

In beiden Schnitten (Fig. 2, 3) sieht man insgesamt fünf Rohrleitungen. Zentral ist hier das Verfüllrohr 41 vorgesehen, welches für das Einleiten der Suspension dient. Radial weiter außen angeordnet sind zwei Erdwärmesonden 4, 4a, 4b vorgesehen, die als Rohrschlaufen 45 ausgebildet sind und einen Vorlauf 46 und einen Rücklauf 47 ausbilden.

In Fig. 2 sind eine Vielzahl von Laufzeitmesssensoren 2, 2a, 2b, 2c, 2d vorgesehen, die nicht komplett an der Außenseite der Tragstruktur 40, aber doch möglichst weit voneinander beabstandet, an den einzelnen Rohren der Zu- und Rückläufe 46, 47 angeordnet sind. Die gestrichelten Kreise an den Laufzeitmesssensoren 2,2a,2b,2c,2d deuten die abschnittsweisen Befestigungen der Laufzeitmesssensoren 2,2a,2b,2c,2d an der Tragstruktur 40 an, sie sind nur abschnittsweise zum Beispiel durch entsprechende Kabelbinder, Klebebänder oder ähnliches an der Tragstruktur 40 festgelegt. Die Laufzeitmesssensoren 2a,2b,2c,2d sind hier als Zweibandleiter ausgebildet, angedeutet durch die beiden kleineren Kreise, die in dem gestrichelten Befestigungskreis sind. Zumindest ein Leiter des Zweibandleiters steht in unmittelbarem Kontakt mit dem Medium 6, dessen Dielektrizitätskonstante zu messen ist. Die bezüglich der radialen Außenposition etwas zurückgesetzte Lage der Laufzeitmesssensoren 2a, 2b, 2c, 2d schützt diese redundante Anordnung vor möglichen Beschädigungen beim Einführen der Tragstruktur 40 beziehungsweise der Erdwärmesonde 4 in die Erdreichöffnung 9. Dabei ist zu beachten, dass die fünf Rohre (zwei Vorläufe 46, zwei Rückläufe 47 sowie das Verfüllrohr 41) nicht als loses Rohrbündel vorliegen, sondern durch geeignete Mittel miteinander verbunden sind oder als Paket verschweißt sind.

Die in Fig. 2 gezeigte Variante des Laufzeitmesssensors 2 werden nur einseitig angeschlossen, eine Zuleitung des Messsignals nach unten erfolgt in diesem Ausführungsbeispiel nicht, ist aber gleichwohl möglich.

Hingegen ist in Fig. 3 ein zweiseitiger Anschluss realisiert, da an der Tragstruktur 40 die Messleitung 23 als Koaxialkabel ausgeführt und gezeigt angeordnet ist, der Laufzeitmesssensor 2 ist ähnlich wie in Fig. 2 ausgebildet etwas freier angeordnet, damit dieser von dem zu messenden Medium 6 gut umspült wird.

Die in Fig. 3 gezeigte Variante der Tragstruktur 40 zeichnet sich durch eine größere Distanzierung der einzelnen Rohre 46,47 aus, dies wird durch die Verwendung eines entsprechenden Abstandhalters 48, der zum Beispiel quadratisch mit Rundungen an den Ecken zur Aufnahme der Vor- und Rückläufe 46, 47 realisiert.

In Fig. 4 ist ein Ausführungsbeispiel eines erfindungsgemäßen Laufzeitmesssensors 2 gezeigt. Er wird ursprünglich gebildet aus einem Koaxialkabel 29, welcher aus einem Innenleiter 24 und einem Außenleiter 27 gebildet ist, wobei der Außenleiter 27 den Innenleiter koaxial umgibt und durch einen Abstandshalter beziehungsweise einen Isolator getrennt ist, um einen Kurzschluss zwischen Innenleiter und Außenleiter zu vermeiden.

Auf dem Drahtbereich beziehungsweise Innenleiter 24 wird der Messimpuls aufgeprägt.

Beispielhaft ist der Medienspiegel 12 angedeutet, die gesamte Anordnung ist in geeigneter Weise an der nicht weiter dargestellten Tragstruktur 40 befestigt. Es ist gut zu erkennen, dass in dem hier gezeigten Ausführungsbeispiel der Medienspiegel 12 gerade im Messbereich 25 steht, der durch eine Ausnehmung des geschirmten Bereichs 26 gekennzeichnet ist, nur der Außenleiter 27 weist eine Verbindungsbrücke auf, im Messbereich ist der überwiegende Teil des Außenleiters 27 und des zwischen dem Außenleiter 27 und den Drahtbereich 24 angeordneten Isolators beziehungsweise Abstandsmaterials entfernt, damit das Medium 6 direkten Kontakt mit dem Drahtbereich 24, hier den Innenleiter 24 hat.

Die Messbereiche 25 sind bevorzugt in einem gleichbleibenden Abstand auf der Sensorleitung 20 beziehungsweise dem Laufzeitmesssensor 2 angeordnet und diese Periodizität wird in der Auswerteinheit ausgenützt. Die Periodizität führt zu einem entsprechenden periodischen Antwortsignal, das aufgrund der Laufzeit als periodisches Auswertsignal zu erkennen ist und daher entsprechend dieser Frequenz zu filtern ist. Da der Signalabstand von der Laufgeschwindigkeit und den Periodizitätskonstanten abhängt, hängt somit auch die Wiederholfrequenz des Antwortsignals in dem in die Medium 62 einstehenden Bereich typischerweise von der Dielektrizitätskonstanten ab und verändert sich. Diese beiden unterschiedlichen Frequenzen sind ermittelbar und hieraus ist auch dann die Lage l₂ des Medienspiegels 12 ableitbar.

Die jetzt mit der Anmeldung und später eingereichten Ansprüche sind ohne Präjudiz für die Erzielung weitergehenden Schutzes. Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Verfahren für das überwachte Verfüllen einer Erdreichöffnung (9) mit einer zunächst flüssigen, dann aushärtenden Suspension (62) als Medium (6), wobei die Lage (l₂) des Mediums (6,62) mit dem Verfahren zur Messung der Lage (l₁,l₂) des Mediumspiegels (11,12) nach einem der nachfolgenden Ansprüche 2 - 4 durchgeführt wird und das Messverfahren zum insbesondere kontinuierlichen Messen und Anzeigen des Lagewert (l₁,l₂) des Mediumspiegels (11,12) beziehungsweise Suspensionsspiegels (11,12) dient.

2. Verfahren, insbesondere Messverfahren, zur Messung der Lage (l₁,l₂) des Mediumspiegels (11,12) in einer Erdreichöffnung (9), zum Beispiel einem Bohrloch oder einer Bodenöffnung, wobei in die Erdreichöffnung (9) ein Laufzeitmesssensor (2) eingebracht wird, der Laufzeitmesssensor (2) mit einem Signalgenerator (SG) und einer Auswerteinheit (AW) verbunden ist, wobei für die Messung der Lage (l₁,l₂) auf dem Laufzeitmesssensor (2) ein Messimpuls aufgeschaltet wird und die Auswerteinheit (AW) aus der Laufzeit beziehungsweise der Laufzeitdifferenz des vom Laufzeitmesssenor reflektierten Antwortsignals (A₁, A₂) den Lagewert (l₁, l₂) des Mediumspiegels (11,12) bestimmt und dieser Lagewert (l₁, l₂) von einem mit der Auswerteinheit (AW) verbundenen Anzeigeeinheit (3) angezeigt wird.

3. Verfahren nach Anspruch 2, **dadurch gekennzeichnet, dass** der Laufzeitmesssensor (2) an einer in die Erdreichöffnung (9) einbringbaren Tragstruktur (40) insbesondere lagestabil vorgesehen wird und die Eindringlänge des Laufzeitmesssensors (2) an der Tragstruktur (40) in die Erdreichöffnung (9) ermittelt und für Kalibrierungszwecke in die Auswerteinheit (AW) eingegeben wird und/oder der Laufzeitmesssensor (2) während der kontinuierlichen Messung des Mediumspiegels (11,12) lagestabil in der Erdreichöffnung (9) verbleibt und/oder der Laufzeitmesssensor (2) als sich zumindest über eine Teillänge der Tragstruktur (40) erstreckende Sensorleitung (20) ausgebildet ist, deren beiden Enden (21,22) über eine Wähleinheit (5) mit der Auswerteinheit (AW) beziehungsweise Signalgenerator (SG) wahlweise verbunden wird, wobei an der Tragstruktur (40) zusätzlich eine Messleitung (23) vorgesehen ist, die mit dem in der Erdreichöffnung (9) einstehenden unteren Ende (22) des Laufzeitmesssensors (2) verbunden ist.

4. Verfahren nach einem der vorhergehenden Ansprüche 2 bis 3, **dadurch gekennzeichnet, dass** mehrere in der Erdreichöffnung (9) im Wesentlichen parallel, jeweils zueinander beabstandete Laufzeitmesssensoren (2a,2b,2c,2d) vorgesehen sind, die mit der Auswerteinheit (AW) verbunden sind oder nacheinander verbindbar sind und die Auswerteinheit (AW) gleichzeitig oder in insbesondere kurzer Folge hintereinander die Lagewert (l₁, l₂) des Mediumspiegels (11,12) mehrerer oder aller an der Auswerteinheit (AW) angeschlossenen Laufzeitmesssensoren (2a,2b,2c,2d) erfasst und aus diesen Lagewerten (l₁,l₂) ein Flächenprofil über den Grad der Verteilung des Mediums (6,61,62) in der Erdreichöffnung (9) an einem Lagewert (l₁, l₂) oder in einem Lageintervall an dem Lagewert (l₁, l₂) erstellt.

5. Verfahren nach einem der vorhergehenden Ansprüche, **dadurch gekennzeichnet, dass** das Medium (6,61,62) beziehungsweise die Suspension (6,61,62) über ein an der Tragstruktur (40) vorgesehenes Verfüllrohr (41) im unteren Bereich (42) der Tragstruktur (40), bevorzugt am tiefsten Punkt, in die Erdreichöffnung (9) eingebracht wird und/oder der Laufzeitmesssensor (2) auch während des und nach dem Aushärtvorgang der Suspension (62) in der Erdreichöffnung (9) verbleibt und dann insbesondere einer Überwachung der Qualität beziehungsweise der Ermittlung mindestens einem anderen physikalischen Parameter (pP) der aushärtenden oder ausgehärteten Suspension (62) dient und die Auswerteinheit (AW) eine ortsaufgelöste Auswertung des mindestens einen physikalischen Parameters (pP) zur Verfügung stellt und an der Anzeigeinheit (3) anzeigt.

6. Verfahren nach einem der vorhergehenden Ansprüche, **dadurch gekennzeichnet, dass** in der Zuleitung zum Verfüllrohr (41) oder am Verfüllrohr (41) ein Volumenstrommesssensor (43) vorgesehen ist, der datentechnisch mit der Auswerteinheit (AW) verbunden ist und die Auswerteinheit (AW) bezogen auf die Lage (l₁, l₂) des Mediumspiegels (11,12) beziehungsweise Suspensionsspiegels (11,12) das in die Erdreichöffnung (9) eingebracht Medium- beziehungsweise Suspensionsvolumen mit erfasst und speichert und/oder aufgrund des Lagewertes (l₁,l₂) des Mediumspiegels (11,12) beziehungsweise des Längenunterschieds zweier Lagewerte (l₁,l₂) und des eingebrachten Mediums- beziehungsweise Suspensionsvolumens beziehungsweise des zwischen den beiden Lagewerte (l₁,l₂) eingeleiteten Mediums- beziehungsweise Suspensionsvolumens von der Auswerteinheit (AW) auf die Querschnittfläche der Erdreichöffnung (9) auf Höhe des Mediumspiegels (11,12) oder zwischen zwei Mediumspiegellagen (11,12) geschlossen wird und die Anzeigeeinheit (3) dies anzeigt.

7. Mediumspiegelmessvorrichtung (1), insbesondere zur Durchführung des Verfahrens nach einem der vorhergehenden Ansprüche, für die Messung der Lage (l₁,l₂) des Mediumspiegels (11,12) in einer Erdreichöffnung (9), zum Beispiel einem Bohrloch, Bodenöffnung oder dergleichen, wobei die Mediumspiegelmessvorrichtung (1) ein in die Erdreichöffnung (9) eintauchenden Laufzeitmesssensor (2) aufweist, der mit einem Signalgenerator (SG) zur Einprägung eines Messimpulses auf den Laufzeitmesssensor (2) sowie mit einer Auswerteinheit (AW) zur Auswertung des Antwortsignals des Laufzeitmesssensors (2) verbunden ist, wobei die Auswerteinheit (AW) aus der Laufzeit beziehungsweise der Laufzeitdifferenz von Messimpuls beziehungsweise Antwortsignal den Lagewert (l₁, l₂) des Mediumspiegels (11,12) ermittelt und eine Anzeigeeinheit (3) zumindest diesen Wert anzeigt.

8. Mediumspiegelmessvorrichtung nach Anspruch 7, **dadurch gekennzeichnet, dass** der Laufzeitmesssensor (2) als Ein-Band-oder Mehr-Band-Wellenleiter ausgebildet ist und/oder der Laufzeitmesssensor (2) zumindest einen einen Messimpuls leitenden Drahtbereich (24) aufweist und der Laufzeitmesssensor (2) einen Messbereich (25) aufweist, der mit dem Medium (6) derart in Verbindung steht, dass die Dielektrizitätskonstante (DK) des Mediums (6) auf den Messimpuls zu wirken vermag.

9. Mediumspiegelmessvorrichtung nach einem der Ansprüche 7 bis 8, **dadurch gekennzeichnet, dass** der Laufzeitmesssensor (2) eine Mehrzahl von in ihren jeweiligen Lagen bekannten Messbereichen (25) aufweist, die von geschirmten Bereichen (26) getrennt sind und/oder der Laufzeitmesssensor (2) aus einem Koaxialkabel gebildet wurde, wobei in dem Messbereich (25) aus dem Koaxialkabel zumindest ein Teil des Außenleiters (27) und gegebenenfalls des Abschirmmaterials entfernt ist.

10. Mediumspiegelmessvorrichtung nach einem der Ansprüche 7 bis 9, **dadurch gekennzeichnet, dass** der Laufzeitmesssensor (2) an einer in die Erdreichöffnung (9) einbringbaren Tragstruktur (40) lagestabil angeordnet ist und/oder der Laufzeitmesssensor (2) ein erstes, oberes, in der Erdreichöffnung (9) oben oder im oberen Bereich (44) anordenbares Ende (21) und ein zweites, unteres, in der Erdreichöffnung (9) unten oder im unteren Bereich (42) angeordnetes Ende (22) aufweist und beide Laufzeitmesssensorenden (21,22) jeweils mit einer Messleitung (23,23a,23b) mit der Auswerteinheit verbunden sind.

11. Mediumspiegelmessvorrichtung nach einem der Ansprüche 7 bis 10, **dadurch gekennzeichnet, dass** als Messleitung (23) eine verlustfreie oder verlustarme Leitung, insbesondere ein Koaxialkabel vorgesehen ist und/oder die erste oder zweite Messleitung (23,23a,23b) über eine Wähleinheit (5) mit der Auswerteinheit (AW) beziehungsweise dem Signalgenerator (SG) je nach Bedarf verbindbar ist.

12. Mediumspiegelmessvorrichtung nach einem der Ansprüche 7 bis 11, **dadurch gekennzeichnet, dass** die Mediumspiegelmessvorrichtung (1) mehrere in der Erdreichöffnung (9) im Wesentlichen parallel jeweils zueinander beabstandete Laufzeitmesssensoren (2,2a,2b,2c,2d) aufweist, die mit der Auswerteinheit (AW) verbunden beziehungsweise verbindbar sind und/(oder die Auswerteinheit (AW) mit einem Volumenstrommesssensor (43) datentechnisch verbunden ist, wobei der Volumenstrommesssensor (43) in der Zuleitung des Verfüllrohres (41) oder im Verfüllrohr (41) vorgesehen ist und die Auswerteinheit (AW) das in die Erdreichöffnung über das Verfüllrohr (41) eingebrachte Mediumvolumen korreliert auf den gemessenen Mediumspiegel (11,12) aufzeichnet und abspeichert.

13. Verwendung einer Mediumspiegelmessvorrichtung nach einem der Ansprüche 7 bis 12, für das überwachte Verfüllen einer Erdreichöffnung, insbesondere mit einer zunächst flüssigen, dann aushärtenden Suspension (62) als Medium (6),

14. System aus Erdwärmesonde (4) und Laufzeitmesssensor (2), wobei die Erdwärmesonde (4) eine Tragstruktur (40) aufweist, bildet oder zur Verfügung stellt, welche einen Laufzeitmesssensor (2) trägt, der mit einer Mediumspiegelmessvorrichtung (1) nach einem der Ansprüche 7 bis 12 verbindbar ist.

15. System nach Anspruch 14, **dadurch gekennzeichnet, dass** das System während des Verfüllvorgangs der die Erdwärmesonde (4) aufnehmenden Erdöffnung (9) mit Suspension (6,62) über die Mediumspiegelmessvorrichtung (1) die Lage (l₂) des Suspensionsspiegels (12) über die Anzeigeeinheit (3) zur Verfügung gestellt wird und/oder das System nach dem Verfüllvorgang über die Messvorrichtung, insbesondere Mediumspiegelmessvorrichtung (1), insbesondere ein ortsaufgelöstes Profil (30) eines von der Dielektrizitätskonstante (DK) abhängigen physikalischen Parameters, insbesondere über die Anzeigeeinheit (3), zur Verfügung stellt.
